# EUROPEAN PATENT APPLICATION

(11) **EP 4 703 258 A1**
(43) Date of publication of application: **04.03.2026**
(21) Application number: 24382926.4
(22) Date of filing: 28.08.2024
(51) Int. Cl.: B64C 1/06, B64C 1/12

(54) **FITTING STRUCTURE FOR AIRCRAFT FUSELAGE**

(71) Applicant: Airbus Operations, S.L.U., 28906 Getafe, Madrid (ES)
(72) Inventor: MARTÍN CALVO, David, 28906 Getafe (ES); SOLA CASADO, Esther, 28906 Getafe (ES); JIMENEZ NUÑEZ, Joaquin Andres, 28906 Getafe (ES); GOMEZ VIZCAINO, Raul José, 28906 Getafe (ES); COLMENAREJO MATELLANO, Nuria, 28906 Getafe (ES)
(74) Representative: Elzaburu S.L.P.

(57) **Abstract**

Fitting structure for aircraft fuselage configured to attach a first aircraft fuselage element (201) to a second aircraft fuselage element (202) along complementary section perimeters (100) of both aircraft fuselage elements (201, 202), wherein the fitting structure for aircraft fuselage comprises: a plurality of first wedge elements (101) distributed along a first section perimeter (100a) of the first aircraft fuselage element (201), and; a plurality of second wedge elements (102) distributed along a second section perimeter (100b) of the second aircraft fuselage element (202); and; at least one butt-strap (300) configured to cover an outer side of the first aircraft fuselage element (201) and an outer side of the second aircraft fuselage element (202) in correspondence with their complementary section perimeters (100).

## Description

### Technical field

The present invention is directed to a fitting structure for aircraft fuselage, specially indicated for providing a robust and safe joint between two aircraft fuselage elements while permitting to easily disassemble the two aircraft fuselage elements for providing access to the interior of the aircraft fuselage.

The fitting structure for aircraft fuselage, object of the present invention, allows for an easy access to otherwise inaccessible parts in the interior of the aircraft fuselage, in case maintenance or repair operations are needed.

This invention is preferably applicable in the field of designing, manufacturing, operation and maintenance of aircraft fuselage components.

### Background of the invention

In the process of designing and manufacturing the structural elements of an aircraft fuselage, orbital joints are usually envisaged for producing the joint of two different sections of the fuselage.

Orbital joints are carried out along the perimeter of the section of the elements to be joined. The structural assembly of the elements thus joined is carried out using fasteners such as rivets, this operation taking the name of sewing orbital. In order to ensure the mechanical continuity of the structure thus assembled, the elements must be in intimate contact at the junction. This implies that the two elements are manufactured with precision so that at the junction interface the shapes of the two elements are identical or perfectly complementary depending on whether the junction is made end to end or by interlocking.

Besides, in the context of hydrogen powered aircraft development, large tanks of fuel need to be accommodated in the fuselage. Access to these tanks for operations of maintenance, removal and substitution need to be provided.

Maintenance requirements for hydrogen tanks are not fixed in the current status of the development so the conditions in which the access to them will be provided is unclear.

With this scope, the option to use an orbital joint, normally used to attach different sections of the fuselage, to provide access to the tanks could be a first logical approach. However, existing solutions for orbital joint are either industrial assemblies not intended for maintenance access or heavy and complex mechanisms in cargo aircraft.

### Summary of the invention

With the aim of providing a solution to the abovementioned problems, the present invention refers to a fitting structure for aircraft fuselage.

The fitting structure for aircraft fuselage, object of the present invention, is configured to attach a first aircraft fuselage element to a second aircraft fuselage element, along respective complementary section perimeters of both aircraft fuselage elements.

In a novel manner, the fitting structure for aircraft fuselage, object of the present invention, comprises:
- a plurality of first wedge elements (e.g. a plurality of male wedge elements) configured to be distributed along a first section perimeter of the first aircraft fuselage element, each first wedge element comprising a first portion configured to be attached to an inner side of the first aircraft fuselage element and a second portion tilted with respect to the first portion, the second portion configured to be arranged outwardly projecting from the first aircraft fuselage element beyond the first section perimeter;
- a plurality of second wedge elements (e.g. a plurality of female wedge elements) configured to be distributed along a second section perimeter of the second aircraft fuselage element, each second wedge element comprising a first portion configured to be attached to an inner side of the second aircraft fuselage element and a second portion tilted with respect to the first portion, and;
- at least one butt-strap configured to cover both an outer side of the first aircraft fuselage element and an outer side of the second aircraft fuselage element in correspondence with their complementary section perimeters (thereby providing a continuity of the aircraft fuselage skin in correspondence with the joint of the two aircraft fuselage elements), and;
- a plurality of fasteners configured to attach the butt-strap to the skin of the fuselage.

By means of the fitting structure described above, an easy-to-mount structure is provided, wherein the two aircraft fuselage elements can be attached to one another by easily placing the first wedge elements in correspondence with the second wedge elements, thereby guiding the relative movement between the two aircraft fuselage elements, and the using the butt-strap as a structural element for transmitting forces between the two aircraft fuselage elements.

Moreover, a complementary geometry of the wedge first and second elements allow for easily guiding the relative movement of the two aircraft fuselage elements, thereby allowing an easy approaching and/or separation of the two aircraft fuselage elements for granting access for inspection, maintenance and/or reparation purposes.

The fitting structure for aircraft fuselage may thus comprise a plurality of first fasteners with floating nuts arranged and/or configured to attach the butt-strap to the skin of the fuselage.

Furthermore, the fitting structure for aircraft fuselage may thus comprise a plurality of self-aligning fasteners arranged and/or configured to attach the butt-strap to the skin of the fuselage.

The self-aligning fasteners facilitate carrying out a fine adjustment in the mounting and attachment of the butt-strap to the skin of the fuselage.

According to a possible aspect of the present invention, each second wedge element is configured to be attached, in correspondence with its second portion, to a corresponding second portion of a first wedge element.

In addition, the second portion of the wedge fittings preferably comprise a three-sided open volume with side walls forming a pyramidal shape. Therefore, the pyramidal shape of the first wedge element (male wedge element) is complementary to the pyramidal shape of the second wedge element (female wedge fitting), thereby functioning as guiding elements in the approaching and separation manoeuvres between the two aircraft fuselage elements.

The second portion of the first wedge fitting may be configured to be attached to the second portion of the second wedge fitting by means of a plurality of self-aligning fasteners distributed along the surfaces of the second portions of the wedge fittings.

The wedge fittings are preferably configured to be located between stringers of the aircraft fuselage.

Specifically, in a preferred embodiment of the invention, each wedge fitting of the fitting structure for aircraft fuselage is configured to be located between every two stringers of the aircraft fuselage.

### Brief description of the drawings

As a means for better understanding at least one embodiment of the present invention, the following set of drawings is introduced by way of schematic illustration and in a non-limitative manner.
Figure 1: Shows a schematic view of a rear fuselage element and a forward fuselage element to be attached by means of a possible embodiment of the fitting structure for aircraft fuselage according to the present invention.
Figure 2: Shows a schematic view according to section A-A of Figure 1.
Figure 3: Shows a schematic view in which a second wedge fitting and a first wedge fitting can be seen, according to a possible embodiment of the fitting structure for aircraft fuselage according to the present invention.
Figure 4a: Shows a schematic side view of a first wedge fitting, according to one possible embodiment of the fitting structure for aircraft fuselage according to the present invention.
Figure 4b: Shows a schematic front view of a first wedge fitting, according to one possible embodiment of the fitting structure for aircraft fuselage according to the present invention.

### Detailed description

The present invention, as already introduced, refers to a fitting structure for aircraft fuselage.

The fitting structure for aircraft fuselage, object of the present invention, allows for a safe attachment of two aircraft fuselage elements (201, 202), in a secure and safe manner.

The fitting structure for aircraft fuselage, object of the present invention, further allows for an easy-to-release attachment of two aircraft fuselage elements (201, 202), thereby allowing a separation of the two aircraft fuselage elements (201, 202) when access is needed for maintenance or inspection purposes, such as when there is a need for access to the hydrogen deposits inside one or more aircraft fuselage elements (201, 202).

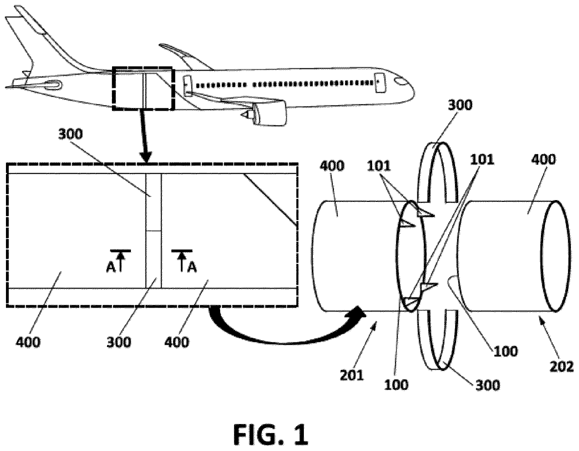

According to a preferred embodiment of the present invention, as schematically depicted in Figure 1, the fitting structure for aircraft fuselage comprises a plurality of wedge fittings (101, 102) orbitally distributed along the section perimeter (100) of at least two aircraft fuselage elements (201, 202) to be attached to one another.

Thus, when a first aircraft fuselage element (201) is to be attached to a second aircraft fuselage element (202), the first aircraft fuselage element (201) may comprise a plurality of orbitally distributed first wedge fittings (101) (which can be formed as male wedge fittings) along its section perimeter (100), configured to be attached to a plurality second wedge fittings (102) (which can be formed as female wedge fittings) equally distributed along the section perimeter (100) of the second aircraft fuselage element (202).

Each first wedge element (101) comprises a first portion (101a) attached to an inner side of the first aircraft fuselage element (201) and a second portion (101b) tilted with respect to the first portion (101a), the second portion outwardly projecting from the first aircraft fuselage element (201) beyond the first section perimeter (100a).

Besides, each second wedge element (102) comprises a first portion (102a) attached to an inner side of the second aircraft fuselage element (202) and a second portion (102b) tilted with respect to the first portion (102a).

The first wedge elements (101) and the second wedge elements (102) serve as guiding elements in the relative movement of the first aircraft fuselage element (201) and the second aircraft fuselage element (202)

According to a possible embodiment of the invention, each second wedge element (102) is configured to be attached, in correspondence with its second portion (102b), to a corresponding second portion (101b) of a first wedge element (101).

The fitting structure comprises at least one butt-strap (300) configured as a structural element to transmit forces and provide a continuity between the two aircraft fuselage elements (201, 202). The butt-strap (300) is configured to be attached to the aircraft fuselage skin (400) by means of fasteners (601, 602) in the section corresponding to the joint of the two aircraft fuselage elements (201, 202).

The butt-strap (300) is thus configured to attach two aircraft fuselage elements (201, 202) to one another.

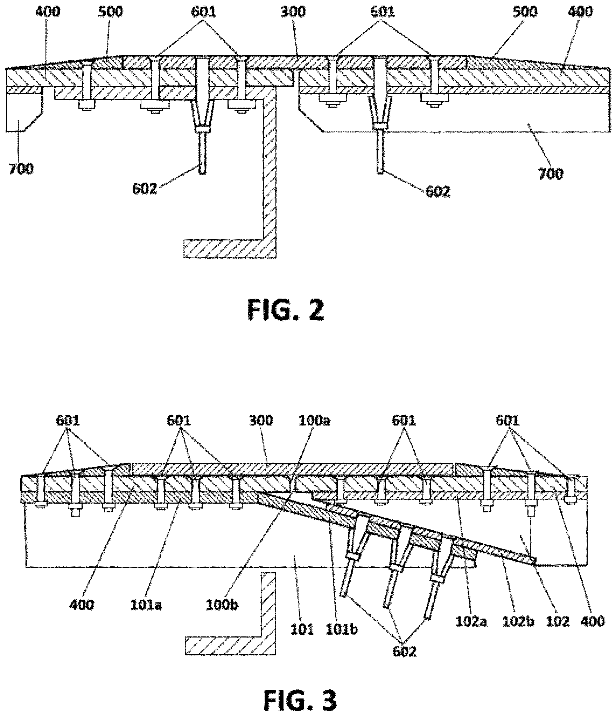

Figure 2 shows a schematic view, according to section A-A of Figure 1, in which a plurality of first fasteners (601) with floating nuts are arranged to attach the butt-strap (300) to the skin (400) of the fuselage.

Furthermore, a plurality of self-aligning fasteners (602) are further arranged to attach the butt-strap (300) to the skin (400) of the fuselage.

As can be appreciated in Figure 2, the fuselage skin (400) is maintained flat (so the aerodynamic shape is guaranteed) by means of surface wedges (500). This solution has a small aerodynamic penalty. Alternatively, the skin (400) of the fuselage may comprise a stage section, gradually diminishing its width, for not penalizing the fuselage aerodynamics.

The number of self-aligning fasteners (602) shall be decided empirically to a minimum necessary. The solution with two of these fasteners per line is proposed as a robust approach but probably the actual number required is much lower. The middle location of these joints is selected to magnify the adapting effect and also to obtain a better load distribution (as the diameter is greater the load transfer is also greater so the middle position helps reducing this effect and the load distribution in the fastener line is equalized).

Figure 3 schematically shows a side view of the wedge fittings (101, 102), namely a first wedge fitting (101) and a second wedge fitting (102).

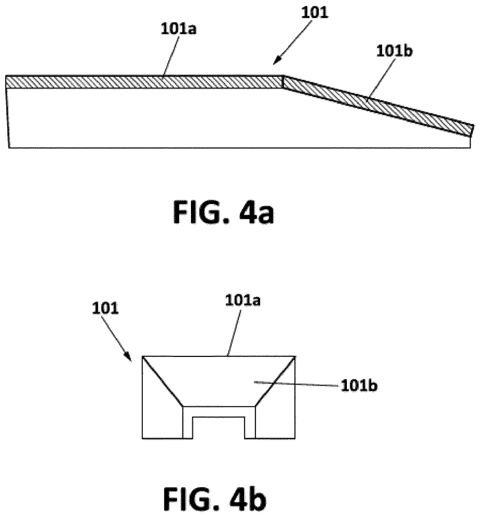

Figure 4a schematically depicts a first wedge fitting (101).

The second portions (101b, 102b) of the wedge fittings (101, 102) comprise a pyramidal shape (both of horizontal and side walls are tilted so they are able to adapt fuselage section displacements in radial and tangential directions), as can be appreciated in the front view of a first wedge fitting (101), depicted in Figure 4b.

The first wedge fitting (101) can be attached to the second wedge fitting (102) by means of a plurality of self-aligning fasteners (602) distributed along the surfaces of the second portion (101b, 102b) of the wedge fittings (101, 102).

The wedge fittings (101, 102) are located between stringers (700). The self-aligning fasteners (602) used to attach the first wedge fitting (101) to the second wedge fitting (102) can be used if the load continuity between the wedge fittings (101, 102) is relevant or in case the orbital joint needs out of plane stabilizers.

The number of wedge fittings (101, 102) disposed along the section perimeter (100) is to be decided depending on assembly and structural needs, considering 3-4 as a minimum, with the option in the other extreme of the range to have one of them between every two stringers (700).

## Claims

1. Fitting structure for aircraft fuselage configured to attach a first aircraft fuselage element (201) to a second aircraft fuselage element (202) along complementary section perimeters (100) of both aircraft fuselage elements (201, 202), wherein the fitting structure for aircraft fuselage is **characterised in that** it comprises:
- a plurality of first wedge elements (101) configured to be distributed along a first section perimeter (100a) of the first aircraft fuselage element (201), each first wedge element (101) comprising a first portion (101a) configured to be attached to an inner side of the first aircraft fuselage element (201) and a second portion (101b) tilted with respect to the first portion (101a), the second portion configured to be arranged outwardly projecting from the first aircraft fuselage element (201) beyond the first section perimeter (100a);
- a plurality of second wedge elements (102) configured to be distributed along a second section perimeter (100b) of the second aircraft fuselage element (202), each second wedge element (102) comprising a first portion (102a) configured to be attached to an inner side of the second aircraft fuselage element (202) and a second portion (102b) tilted with respect to the first portion (102a), and;
- at least one butt-strap (300) configured to cover both an outer side of the first aircraft fuselage element (201) and an outer side of the second aircraft fuselage element (202) in correspondence with their complementary section perimeters (100), and;
- a plurality of fasteners (601, 602) configured to attach the butt-strap (300) to a skin (400) of the fuselage.

2. Fitting structure for aircraft fuselage according to claim 1, **characterized in that** it comprises a plurality of first fasteners (601) with floating nuts arranged to attach the butt-strap (300) to the skin (400) of the fuselage.

3. Fitting structure for aircraft fuselage according to claim 1 or 2, **characterized in that** it comprises a plurality of self-aligning fasteners (602) arranged to attach the butt-strap (300) to the skin (400) of the fuselage.

4. Fitting structure for aircraft fuselage according to any preceding claim, **characterized in that** each second wedge element (102) is configured to be attached, in correspondence with its second portion (102b), to a corresponding second portion (101b) of a first wedge element (101).

5. Fitting structure for aircraft fuselage according to any preceding claim, **characterized in that** the second portion (101b, 102b) of the wedge fittings (101, 102) comprise a three-sided open volume with side walls forming a pyramidal shape.

6. Fitting structure for aircraft fuselage according to any preceding claim, **characterized in that** the first wedge fitting (101) is configured to be attached to the second wedge fitting (102) by means of a plurality of self-aligning fasteners (602) distributed along the surfaces of the second portion (101b, 102b) of the wedge fittings (101, 102).

7. Fitting structure for aircraft fuselage according to any preceding claim, **characterized in that** the wedge fittings (101, 102) are configured to be located between stringers (700) of the aircraft fuselage.

8. Fitting structure for aircraft fuselage according to claim 7, **characterized in that** each wedge fitting (101, 102) is configured to be located between every two stringers (700) of the aircraft fuselage.
